# EUROPÄISCHE PATENTSCHRIFT

(11) **EP 4 394 173 B1**
(45) Veröffentlichungstag und Bekanntmachung des Hinweises auf die Patenterteilung: **12.11.2025**
(21) Anmeldenummer: 23214549.0
(22) Anmeldetag: 06.12.2023
(51) Int. Cl.: F02M 21/02, F02M 35/10, F02M 69/04

(54) **ZYLINDERKOPF FÜR EINE BRENNKRAFTMASCHINE UND EINE BRENNKRAFTMASCHINE MIT EINEM SOLCHEN ZYLINDERKOPF**
CYLINDER HEAD FOR AN INTERNAL COMBUSTION ENGINE AND AN INTERNAL COMBUSTION ENGINE COMPRISING SUCH A CYLINDER HEAD
CULASSE POUR UN MOTEUR À COMBUSTION INTERNE ET UN MOTEUR À COMBUSTION INTERNE AVEC UNE TELLE CULASSE

(30) Priorität: 23.12.2022 DE 102022004897
(43) Veröffentlichungstag der Anmeldung: 03.07.2024
(73) Patentinhaber: DEUTZ Aktiengesellschaft, 51149 Köln (DE)
(72) Erfinder: Nork, Benedikt, 50858 Köln (DE)

(56) Entgegenhaltungen:
- EP-B1- 0 694 124
- WO-A1-03/062624

## Beschreibung

Die vorliegende Erfindung betrifft einen Zylinderkopf für eine Brennkraftmaschine und eine Brennkraftmaschine mit einem solchen Zylinderkopf.

Der Zylinderkopf von Brennkraftmaschinen schließt die Brennkammern auf der dem Kolben gegenüberliegenden Seite ab und umfasst regelmäßig die Ein- und Auslasskanäle sowie die Ventilsteuerung für die Gaswechselvorgänge in der Brennkraftmaschine. Bei Motoren mit Saugrohreinspritzung wird Kraftstoff in den Einlasskanal gespritzt, sodass es im Einlasskanal zur Gemischbildung von dem Kraftstoff mit der angesaugten Luft kommt.

Aus der EP 0 694 124 B1 ist eine Brennkraftmaschine mit Saugrohreinspritzung bekannt, bei der Kraftstoff über ein Röhrchen in den Einlasskanal eingespritzt wird.

An dem sich in den Einlasskanal öffnenden Ende umfasst das Röhrchen ein Zerstäubungssieb, das zu einer verbesserten Gemischbildung den aus dem Röhrchen ausströmenden Kraftstoff zerstäubt. Dies hat den Nachteil, dass sich das Zerstäubungssieb im dauerhaften Betrieb zusetzen kann und die Kraftstoffzufuhr verschlechtert wird. Zudem kann Kraftstoff durch das Zerstäubungssieb in dem Röhrchen zurückgehalten werden, sodass es insbesondere bei der Verwendung von Wasserstoff als Kraftstoff zu ungewollten Rückzündungen in das Röhrchen hineinkommen kann.

Aus der WO 03/062624 A1 ist ein Zylinderkopf für eine Brennkraftmaschine bekannt, umfassend: einen Einlasskanal und einen Injektor, der mit der Zylinderkopf verbunden ist. Ein röhrenförmiges Einspritzröhrchen erstreckt sich in den Einlasskanal und ist mit dem Injektor fluidisch verbunden. In dem Einlasskanal ist ein C-förmiger Befestigungsring und ein mit dem Befestigungsring verschweißtes Kragenelement angeordnet. Der Befestigungsring besteht aus einem Federmaterial und ist so geformt, dass er am stromabwärtigen Ende des Einlasskanals in eine in dem Zylinderkopfkörper ausgebildete Nut eingreift.

Aus der WO 2019/147963 A1 ist ein in einen Zylinderkopfkörper integrierten Injektor mit einem Düsenkopf bekannt. Innerhalb der Injektionsdüse wird Kraftstoff vor dem Austreten aus dem Düsenkopf mit Luft aus einer Luftzufuhr des Injektors vermischt.

Hiervon ausgehend liegt der vorliegenden Erfindung die Aufgabe zugrunde, einen Zylinderkopf für eine Brennkraftmaschine sowie eine Brennkraftmaschine mit einem solchen Zylinderkopf bereitzustellen, die eine dauerhaft günstige Gemischbildung im Einlasskanal ermöglicht.

Zur Lösung der Aufgabe wird ein Zylinderkopf für eine Brennkraftmaschine, insbesondere für eine wasserstoffbetriebene Brennkraftmaschine, vorgeschlagen, umfassend: eine Zylinderkopfanordnung, die einen Einlasskanal aufweist, einen Injektor, der mit der Zylinderkopfanordnung verbunden ist, und ein röhrenförmiges Einspritzröhrchen, das sich entlang einer Röhrenseele in den Einlasskanal erstreckt und mit dem Injektor fluidisch verbunden ist, wobei ein Aufsatzelement auf dem Einspritzröhrchen angeordnet ist, und das Aufsatzelement einen Luftleitabschnitt aufweist, der sich bezüglich der Röhrenseele derart nach radial außen erstreckt, dass eine Strömung in dem Einlasskanal durch den Luftleitabschnitt beeinflusst wird.

Durch den nach radial außen stehenden Luftleitabschnitt wird stromabwärts von dem Luftleitabschnitt eine verstärkt turbulente Strömung in der angesaugten Luft erzeugt, die eine verbesserte Durchmischung der angesaugten Luft mit dem über das Einspritzröhrchen in den Einlasskanal eingespritzten Kraftstoff ermöglicht. Aufgrund der nach radial außen stehenden Anordnung des Luftleitabschnitts wird das Einspritzröhrchen durch den Luftleitabschnitt nicht blockiert, sodass das Einspritzröhrchen weder mit fortschreitendem Betrieb verstopft oder Kraftstoff von diesem in dem Einspritzröhrchen zurückgehalten wird.

Der Einlasskanal bildet den letzten Teil des Lufteinlasssystems des Motors und kann auch als Ansaugkanal bezeichnet werden. Der Einlasskanal verbindet den Ansaugkrümmer mit dem Brennraum und wird mit den Einlassventilen geöffnet und geschlossen.

Der Injektor ist grundsätzlich auch ohne das Einspritzrohr funktionsfähig. Das Einspritzrohr verlagert den Eintrittspunkt des Kraftstoffs in die Strömung des Einlasskanals von der Begrenzungswand des Einlasskanals zur Mitte des Einlasskanals. Das Einspritzrohr muss daher getrennt von den Komponenten des Injektors betrachtet werden, die für seine allgemeine Funktion notwendig sind.

In einer möglichen Ausführungsform kann eine radiale Erstreckung des Luftleitabschnitts bezüglich der Röhrenseele größer sein als eine axiale Erstreckung in Richtung der Röhrenseele.

Der Luftleitabschnitt kann insbesondere als Luftleitblech ausgeführt sein. Hierbei kann dessen Erstreckung entlang eines Umfangs um die Röhrenseele kleiner sein als die radiale Erstreckung bezüglich der Röhrenseele.

In einer weiteren Ausführungsform kann das Aufsatzelement einen ersten Verbindungsabschnitt aufweisen, mit dem das Aufsatzelement auf dem Einspritzröhrchen angeordnet ist.

Der Luftleitabschnitt kann sich von dem ersten Verbindungsabschnitt bezüglich der Röhrenseele nach radial außen erstrecken.

Es ist eine Ausführungsform möglich, in der die kleinste zylinderförmige Einhüllende des ersten Verbindungsabschnitts, deren Zylinderachse koaxial zu der Röhrenseele angeordnet ist, einen kleineren Radius aufweist als der größte radiale Abstand des Luftleitabschnitts von der Röhrenseele.

In einer weiteren möglichen Ausführungsform kann das Aufsatzelement einen zweiten Verbindungsabschnitt aufweisen, der in Anlage mit einer Wand des Einlasskanals ist. Der erste Verbindungsabschnitt und der zweite Verbindungsabschnitt können über den Luftleitabschnitt miteinander verbunden sein. Kräfte, die auf das Einspritzröhrchen einwirken, beispielsweise durch äußere Schwingungen bedingte Massenträgheitskräfte, können somit über das Aufsatzelement an der Wand des Einlasskanals abgestützt werden. Hierdurch wird die Beanspruchung des Einspritzröhrchens, insbesondere in einem Übergangsbereich zum Injektor, reduziert und die Lebensdauer des Einspritzröhrchens dementsprechend erhöht.

In einer weiteren möglichen Ausführungsform kann das Einspritzröhrchen eine Einspritzöffnung aufweisen, die sich in den Einlasskanal öffnet. Das Aufsatzelement kann dabei zwischen dem Injektor und der Einspritzöffnung angeordnet sein.

In einer weiteren möglichen Ausführungsform kann der Zylinderkopf ein erstes Ventil umfassen, das eine erste Brennkammeröffnung des Einlasskanals wahlweise öffnen und verschließen kann. Das erste Ventil kann einen Ventilteller und einen Ventilschaft aufweisen, der sich entlang einer ersten Ventilachse erstreckt. Die Einspritzöffnung kann zumindest abschnittsweise innerhalb einer kleinsten, mit der ersten Ventilachse koaxialen, zylindrischen Einhüllenden des Ventiltellers des ersten Ventils angeordnet sein. Mit anderen Worten kann die Einspritzöffnung innerhalb eines gedachten Zylinders angeordnet sein, der durch eine Grundfläche des Zylindertellers und die Ventilachse definiert ist.

In einer alternativen Ausführungsform kann der Zylinderkopf ein erstes Ventil umfassen, das eine erste Brennkammeröffnung des Einlasskanals wahlweise öffnen und verschließen kann, wobei das erste Ventil einen Ventilteller und einen Ventilschaft aufweist, der sich entlang einer ersten Ventilachse erstreckt, und ein zweites Ventil, das eine zweite Brennkammeröffnung des Einlasskanals wahlweise öffnen und verschließen kann, wobei das zweite Ventil einen Ventilteller und einen Ventilschaft aufweist, der sich entlang einer zweiten Ventilachse erstreckt. In diesem Fall kann sich die Einspritzöffnung zwischen einer ersten gedachten Ebenen, die durch die erste Ventilachse und eine Senkrechte zur Röhrenseele beschrieben ist, und einer zweiten gedachten Ebenen, in der die zweite Ventilachse liegt und die sich parallel zu der ersten gedachten Ebene erstreckt, angeordnet sein.

Zur Lösung der Aufgabe wird ferner eine Brennkraftmaschine vorgeschlagen, die einen Zylinderkopf in einer zuvor beschriebenen Ausgestaltung umfasst.

Nachfolgende werden anhand der Figurenzeichnungen mögliche erfindungsgemäße Ausgestaltungen eines Zylinderkopfes respektive einer Brennkraftmaschine erläutert.

Hierin zeigt:
- Figur 1: eine schematische Darstellung einer Teilschnittansicht einer Brennkraftmaschine mit einem ersten erfindungsgemäßen Zylinderkopf;
- Figur 2: eine Frontansicht des ersten Aufsatzelements aus Figur 1;
- Figur 3: eine Schnittdarstellung des ersten Aufsatzelements entlang der Schnittlinie III-III in Figur 2;
- Figur 4: eine Frontansicht des zweiten Aufsatzelements aus Figur 1;
- Figur 5: eine Schnittdarstellung des zweiten Aufsatzelements entlang der Schnittlinie V-V in Figur 4;
- Figur 6: eine schematische Darstellung einer Teilschnittansicht einer Brennkraftmaschine mit einem zweiten erfindungsgemäßen Zylinderkopf.

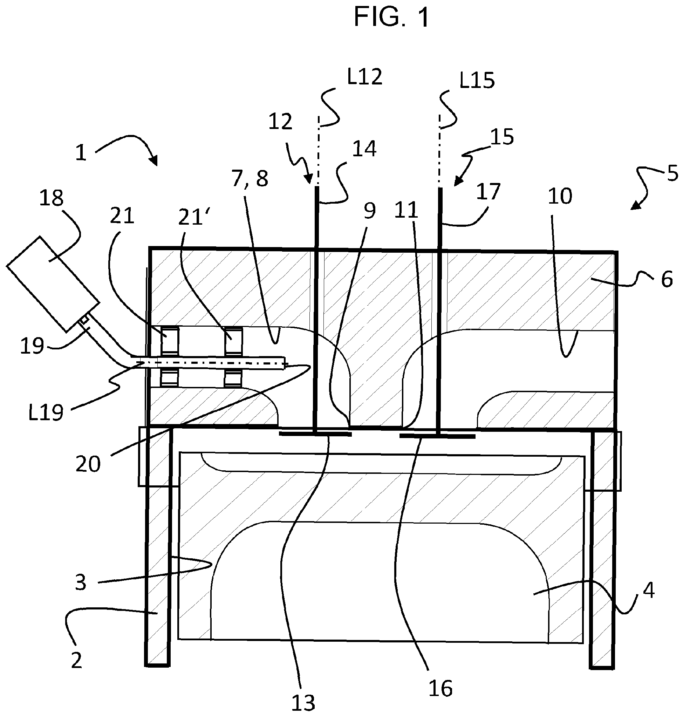

In den Figuren 1 bis 5, die nachfolgend gemeinsam beschrieben werden, wird eine Brennkraftmaschine 1 dargestellt. Die Brennkraftmaschine 1 wird insbesondere mit Wasserstoff als Kraftstoff betrieben. Die Brennkraftmaschine 1 umfasst ein Kurbelgehäuse 2, das mit einem erfindungsgemäßen Zylinderkopf 5 verbunden ist.

Das Kurbelgehäuse 2 umfasst in bekannter Weise eine variable Brennkammer 3, die durch einen beweglichen Kolben 4 und den Zylinderkopf 5 begrenzt wird. Der Zylinderkopf 5 umfasst eine Zylinderkopfanordnung, die ein Zylinderkopfgrundelement 6 und einen nicht dargestellten Zylinderkopfdeckel aufweist, die miteinander verbunden sind.

In dem Zylinderkopfgrundelement 6 sind ein Einlasskanal 7 und ein Auslasskanal 10 eingegossen. Über den Einlasskanal 7 kann der Brennkammer 3 ein Luft-Kraftstoff-Gemisch zugeführt werden. Der Einlasskanal 7 wird durch eine Wand 8 begrenzt und umfasst eine Brennkammereinlassöffnung 9, die sich in Richtung der Brennkammer 3 öffnet. Die Brennkammereinlassöffnung 9 kann in bekannter Weise durch ein Einlassventil 12 wahlweise geöffnet oder verschlossen werden. Das Einlassventil 12 umfasst hierzu einen Einlassventilteller 13, der in einem Ventilsitz der Brennkammereinlassöffnung 9 angeordnet ist, wenn die Brennkammereinlassöffnung 9 verschlossen werden soll, und einen Einlassventilschaft 14, der sich im Wesentlichen zylindrisch entlang einer Ventilachse L12 erstreckt. Das Einlassventil 12 kann durch einen entsprechenden Ventiltrieb, der oberhalb des Zylinderkopfgrundkörpers 6 angeordnet ist, entlang der Ventilachse L12 bewegt werden.

Über den Auslasskanal 10 können die durch die Verbrennung des Luft-Kraftstoff-Gemischs in der Brennkammer 3 entstandenen Abgase aus der Brennkammer 3 ausströmen. Der Auslasskanal 10 wird durch eine Wand begrenzt und umfasst eine Brennkammerauslassöffnung 11, die sich in Richtung der Brennkammer 3 öffnet. Die Brennkammerauslassöffnung 11 kann in bekannter Weise durch ein Auslassventil 30 wahlweise geöffnet oder verschlossen werden. Das Auslassventil 15 umfasst hierzu einen Auslassventilteller 16, der in einem Ventilsitz der Brennkammerauslassöffnung 11 angeordnet ist, wenn die Brennkammerauslassöffnung 11 verschlossen werden soll, und einen Auslassventilschaft 17, der sich im Wesentlichen zylindrisch entlang einer Ventilachse L15 erstreckt. Das Auslassventil 15 kann durch den Ventiltrieb entlang der Ventilachse L15 bewegt werden.

Für die Gemischbildung des Luft-Kraftstoff-Gemisches wird über einen Injektor 18, der über nicht dargestellte Verbindungsmittel mit der Zylinderkopfanordnung, insbesondere mit dem Zylinderkopfgrundelement 6, verbunden ist, Kraftstoff in den Einlasskanal 7 eingespritzt. Hierzu ist ein Auslass des Injektors 18 fluidisch mit einem Einspritzröhrchen 19 verbunden, das sich entlang einer Röhrenseele L19 in den Einlasskanal 7 hinein erstreckt. Das Einspritzröhrchen 19 umfasst eine Einspritzöffnung 20, die sich in den Einlasskanal 7 öffnet. Das Einspritzröhrchen 19 ist im vorliegenden Fall abgewinkelt ausgeführt und umfasst auf Seite des Injektors 18 einen ersten geraden Endabschnitt und auf Seite der Einspritzöffnung 20 einen zweiten geraden Endabschnitt, die über ein Kurvenabschnitt miteinander verbunden sind. Die Röhrenseele L19 erstreckt sich vollständig von einem Ende des Einspritzröhrchens 19 bis hin zu dem gegenüberliegenden Ende, wobei die Röhrenseele L19 in Figur 1 der Übersichtlichkeit halber nur im Bereich des zweiten Endabschnitts dargestellt ist. Es ist ferner denkbar, dass die Röhrenseele jede andere Form annimmt, beispielsweise vollständig gerade oder S-förmig ist.

Die Einspritzöffnung 20 ist im vorliegenden Fall innerhalb eines gedachten geraden Zylinders angeordnet, dessen Grundfläche durch den Einlassventilteller 13 beschrieben wird und sich entlang der Ventilachse L12 erstreckt.

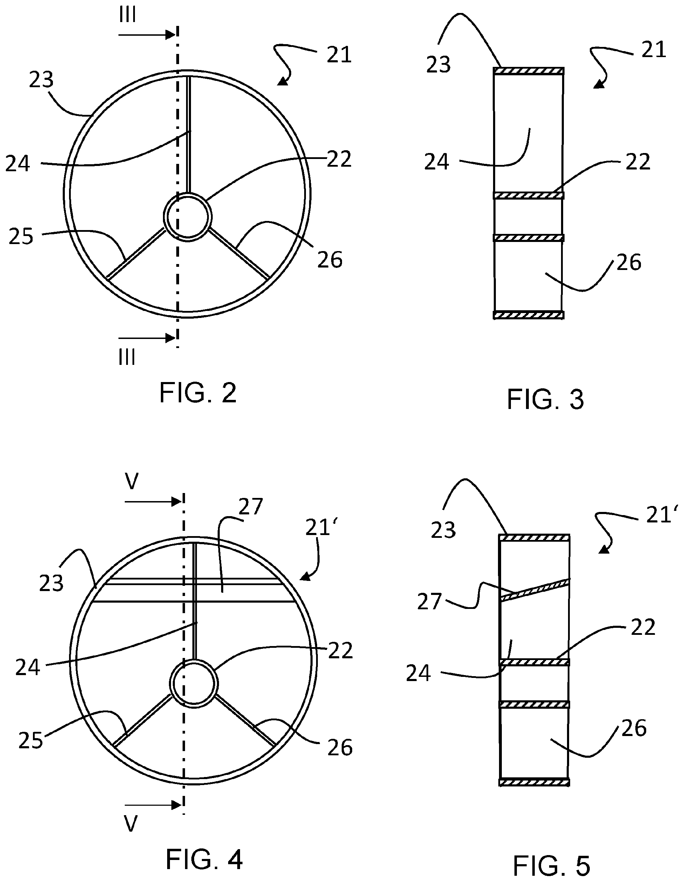

Auf dem Einspritzröhrchen sitzt im Bereich des zweiten Endabschnitts ein erstes Aufsatzelement 21, das in den Figuren 2 und 3 detailliert dargestellt wird, und ein zweites Aufsatzelement 21', das in den Figuren 4 und 5 detailliert dargestellt wird. Das erste Aufsatzelement 21 und das zweite Aufsatzelement 21' sind dabei jeweils zwischen der Einspritzöffnung 20 des Einspritzröhrchens 19 und dem Injektor 18 angeordnet. Hierbei ist das zweite Aufsatzelement 21' entlang der Röhrenseele L19 näher an der Einspritzöffnung 20 angeordnet als das erste Aufsatzelement 21.

Das erste Aufsatzelement 21 umfasst einen ringförmigen ersten Verbindungsabschnitt 22, dessen Innenkontur komplementär zu der Außenkontur das Einspritzröhrchens 19 ausgestaltet ist. Das erste Aufsatzelement 21 ist fest mit dem Einspritzröhrchen 19 verbunden. Im vorliegenden Fall ist das erste Aufsatzelement 21 auf das Einspritzröhrchen 19 aufgepresst. Es ist allerdings auch denkbar, dass die beiden Teile anderweitig gefügt, beispielsweise gelötet oder verklebt, sind.

Ausgehend von dem ersten Verbindungsabschnitt 22 erstrecken sich ein erster Luftleitabschnitt 24, ein zweiter Luftleitabschnitt 25 und ein dritter Luftleitabschnitt 26 jeweils bezüglich der Röhrenseele L19 nach radial außen. Die drei Luftleitabschnitte 24, 25 und 26 weisen dabei jeweils bezüglich der Röhrenseele L19 in radialer Richtung eine größere Erstreckung auf als in axialer Richtung. Die Luftleitabschnitte 24, 25 und 26 weisen jeweils in Umfangsrichtung um die Röhrenseele L19 eine kleinere Erstreckung auf als in radialer Richtung und/oder axialer Richtung und können dementsprechend als Luftleitblech bezeichnet werden. Die Luftleitabschnitte 24, 25 und 26 sind dabei jeweils derart geformt, dass die Strömung von angesaugter Luft in dem Einlasskanal 7 von diesen beeinflusst wird.

Im vorliegenden Fall sind die Luftleitabschnitte 24, 25 und 26 als ebene Luftleitbleche ausgestaltet. Die Luftleitabschnitte 24, 25 und 26 respektive Luftleitbleche können aber auch eine von eben abweichende Form aufweisen, beispielsweise können diese in Richtung der Röhrenseele L19 geschwungen oder tordiert ausgeführt sein. Die Strömung der angesaugten Luft in dem Einlasskanal kann somit durch die Luftleitabschnitte 24, 25 und 26 in Drall- und/oder Walzenbewegung versetzt werden.

Das erste Aufsatzelement 21 umfasst zudem einen ringförmigen zweiten Verbindungsabschnitt 23, der mit einem Bereich der Wand 8 des Einlasskanals 7 in Anlage ist. Der zweite Verbindungsabschnitt 23 ist im vorliegenden Fall in den Einlasskanal 7 eingepresst. Es ist allerdings auch hier denkbar, dass der Verbindungsabschnitt 23 mit der Wand 8 des Einlasskanals 7 anderweitig gefügt ist.

Der erste Verbindungsabschnitt 22 und der zweite Verbindungsabschnitt 23 sind über die Luftleitabschnitte 24, 25 und 26 fest miteinander verbunden. Das Einspritzröhrchen 19 wird somit über das erste Aufsatzelement 21 an der Wand 8 des Einlasskanals 7 abgestützt. Somit können Kräfte, die auf das Einspritzröhrchen 19 einwirken, beispielsweise im Fall von Schwingungen der Brennkraftmaschine 1 die Trägheitskraft des Einspritzröhrchens 19 selbst, durch das Aufsatzelement 21 abgestützt werden. Somit kann die Beanspruchung des Einspritzröhrchens 19 reduziert und dementsprechend die Lebensdauer des Einspritzröhrchens 19 erhöht werden.

Das zweite Aufsatzelement 21' unterscheidet sich von dem ersten Aufsatzelement 21 nur dadurch, dass zusätzlich zu dem ersten Luftleitabschnitt 24, dem zweiten Luftleitabschnitt 25 und dem dritten Luftleitabschnitt 26 ein vierter Luftleitabschnitt 27 vorgesehen ist. Insofern gilt das zuvor bezüglich der Gemeinsamkeiten im Kontext des ersten Aufsatzelements 21 Gesagte analog auch für das zweite Aufsatzelement 21'. Gleiche Elemente sind mit gleichen Bezugszeichen versehen.

Der vierte Luftleitabschnitt 27 ist bezüglich der Röhrenseele L19 windschief angeordnet. Entlang der Röhrenseele L19 ist der vierte Luftleitabschnitt 27 gegenüber der Röhrenseele L19 angestellt. Entlang der Röhrenseele L19 ist somit der Abstand zwischen dem vierten Luftleitabschnitt 27 und der Röhrenseele L19 von konstant abweichend. Insbesondere nimmt der Abstand zwischen dem vierten Luftleitabschnitt 27 und der Röhrenseele L19 entlang der Röhrenseele L19 gleichmäßig zu.

Durch das erste Aufsatzelement 21 und das zweite Aufsatzelement 21' wird somit die Strömung in der angesaugten Luft in dem Einlasskanal 7 derart beeinflusst, dass die Gemischbildung beim Einspritzen des Kraftstoffes in den Einlasskanal 7 verbessert wird. Durch die Anordnung der beiden Aufsatzelemente 21, 21' entfernt von der Einspritzöffnung 20 des Einspritzröhrchens 19 wird der Querschnitt, durch den der Kraftstoff von dem Einspritzröhrchen 19 in den Einlasskanal 7 einströmen kann, nicht reduziert, sodass der Strom des Kraftstoffes durch die Aufsatzelemente 21, 21' nicht behindert wird oder der verbleibende Querschnitt mit zunehmender Betriebsdauer verstopfen kann.

Es versteht sich, dass anstelle der beiden Aufsatzelement 21, 21' je nach Anwendung eine beliebige Kombination von ersten Aufsatzelementen 21 und zweiten Absatzelementen 21' vorgesehen sein kann. Insbesondere kann genau ein erstes Aufsatzelement 21 oder ein zweites Aufsatzelement 21' vorgesehen sein.

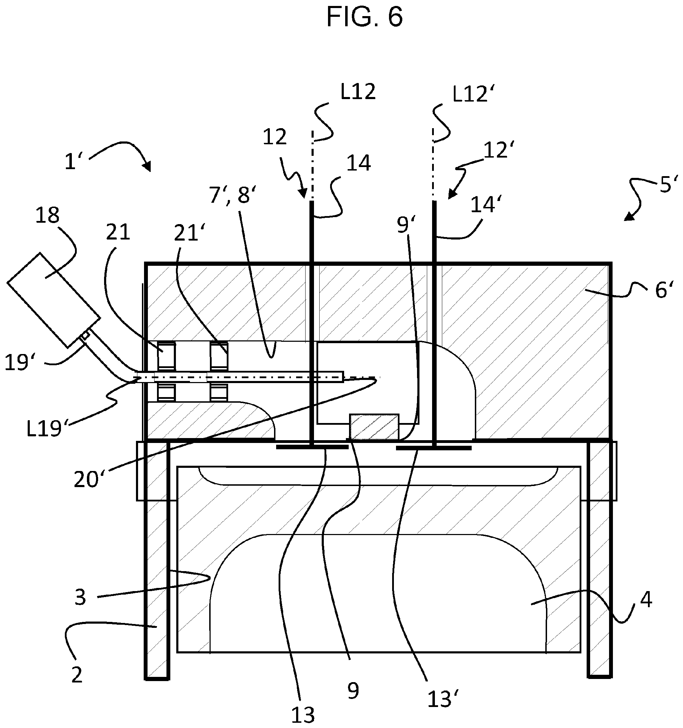

In Figur 6 ist eine weitere Ausgestaltung der Brennkraftmaschine 1' dargestellt, die sich von der Ausgestaltung der Brennkraftmaschine 1 aus Figur 1 durch die Ausformung des Einlasskanals 7' unterscheidet. In Figur 6 sind dementsprechend der Figur 1 gleichende Elemente mit gleichen Bezugszeichen versehen. Insofern gilt das zuvor im Kontext der Figuren 1 bis 5 bezüglich der Gemeinsamkeiten Gesagte analog auch für die Brennkraftmaschine der Figur 6.

In dem Zylinderkopfgrundelement 6' ist ein Einlasskanal 7' eingegossen. Der Auslasskanal ist in Figur 6 nicht dargestellt. Über den Einlasskanal 7' kann der Brennkammer 3 ein Luft-Kraftstoff-Gemisch zugeführt werden. Der Einlasskanal 7' wird durch eine Wand 8' begrenzt und umfasst eine erste Brennkammereinlassöffnung 9 und eine zweite Brennkammereinlassöffnung 9', die sich jeweils in Richtung der Brennkammer 3 öffnen.

Die erste Brennkammereinlassöffnung 9 kann in bekannter Weise durch ein erstes Einlassventil 12 wahlweise geöffnet oder verschlossen werden. Das erste Einlassventil 12 umfasst hierzu einen Einlassventilteller 13, der in einem Ventilsitz der ersten Brennkammereinlassöffnung 9 angeordnet ist, wenn die erste Brennkammereinlassöffnung 9 verschlossen werden soll, und einen Einlassventilschaft 14, der sich im Wesentlichen zylindrisch entlang einer erste Ventilachse L12 erstreckt. Das erste Einlassventil 12 kann durch einen entsprechenden Ventiltrieb, der oberhalb des Zylinderkopfgrundkörpers 6 angeordnet ist, entlang der ersten Ventilachse L12 bewegt werden.

Die zweite Brennkammereinlassöffnung 9' kann in bekannter Weise durch ein zweites Einlassventil 12' wahlweise geöffnet oder verschlossen werden. Das zweite Einlassventil 12' umfasst hierzu einen Einlassventilteller 13', der in einem Ventilsitz der zweiten Brennkammereinlassöffnung 9' angeordnet ist, wenn die zweite Brennkammereinlassöffnung 9' verschlossen werden soll, und einen Einlassventilschaft 14', der sich im Wesentlichen zylindrisch entlang einer zweiten Ventilachse L12' erstreckt. Das zweite Einlassventil 12' kann durch den Ventiltrieb entlang der zweiten Ventilachse L12' bewegt werden.

Die Einspritzöffnung 20' des Einspritzröhrchens 19' ist zwischen einer ersten gedachten Ebene, die durch die erste Ventilachse L12 und eine Senkrechte zu der Röhrenseele L19' beschrieben ist, und einer zweiten gedachten Ebene angeordnet, in der die zweite Ventilachse L12' liegt und die sich parallel zu der ersten gedachten Ebene erstreckt.

### Bezugszeichenliste

- 1: Brennkraftmaschine
- 2: Kurbelgehäuse
- 3: Brennkammer
- 4: Kolben
- 5: Zylinderkopf
- 6: Zylinderkopfgrundelement
- 7: Einlasskanal
- 8: Wand
- 9: Brennkammereinlassöffnung
- 10: Auslasskanal
- 11: Brennkammerauslassöffnung
- 12: Einlassventil
- 13: Einlassventilteller
- 14: Einlassventilschaft
- 15: Auslassventil
- 16: Auslassventilteller
- 17: Auslassventilschaft
- 18: Injektor
- 19: Einspritzröhrchen
- 20: Einspritzöffnung
- 21: Aufsatzelement
- 22: Erster Verbindungsabschnitt
- 23: Zweiter Verbindungsabschnitt
- 24: Luftleitabschnitt
- 25: Luftleitabschnitt
- 26: Luftleitabschnitt
- 27: Luftleitabschnitt

- L19: Röhrenseele
- L12: Ventilachse
- L15: Ventilachse

## Patentansprüche

1. Zylinderkopf (5) für eine Brennkraftmaschine (1), umfassend:
eine Zylinderkopfanordnung, die einen Einlasskanal (7) mit einer Brennkammereinlassöffnung (9) aufweist,
einen Injektor (18), der mit der Zylinderkopfanordnung verbunden ist, und ein röhrenförmiges Einspritzröhrchen (19), das sich entlang einer Röhrenseele (L19) in den Einlasskanal (7) erstreckt und mit dem Injektor (18) fluidisch verbunden ist,
**dadurch gekennzeichnet,**
**dass** ein Aufsatzelement (21) auf dem Einspritzröhrchen (19) angeordnet ist, und
**dass** das Aufsatzelement (21) einen Luftleitabschnitt (25, 26, 27) aufweist, der sich bezüglich der Röhrenseele (L19) derart nach radial außen erstreckt, dass eine Strömung in dem Einlasskanal (7) durch den Luftleitabschnitt (25, 26, 27) beeinflusst wird.

2. Zylinderkopf (5) nach Anspruch 1,
**dadurch gekennzeichnet, dass** eine radiale Erstreckung des Luftleitabschnitts (25, 26, 27) bezüglich der Röhrenseele (L19) größer ist als eine axiale Erstreckung.

3. Zylinderkopf (5) nach einem der Ansprüche 1 oder 2,
**dadurch gekennzeichnet,**
**dass** das Aufsatzelement (21) einen ersten Verbindungsabschnitt (22) aufweist, mit dem das Aufsatzelement (21) auf dem Einspritzröhrchen (19) angeordnet ist, wobei sich der Luftleitabschnitt (25, 26, 27) von dem ersten Verbindungsabschnitt (22) bezüglich der Röhrenseele (L19) nach radial außen erstreckt.

4. Zylinderkopf (5) nach Anspruch 3,
**dadurch gekennzeichnet, dass** die kleinste zylinderförmige Einhüllende des ersten Verbindungsabschnitts (22), deren Zylinderachse koaxial zu der Röhrenseele (L19) angeordnet ist, einen kleineren Radius aufweist als der größte radiale Abstand des Luftleitabschnitts (25, 26, 27) von der Röhrenseele (L19).

5. Zylinderkopf (5) nach einem der Ansprüche 3 oder 4,
**dadurch gekennzeichnet, dass** das Aufsatzelement (21) einen zweiten Verbindungsabschnitt (23) aufweist, der in Anlage mit einer Wand (8) des Einlasskanals (7) ist, wobei der erste Verbindungsabschnitt (22) und der zweite Verbindungsabschnitt (23) über den Luftleitabschnitt (25, 26, 27) miteinander verbunden sind.

6. Zylinderkopf (5) nach einem der Ansprüche 1 bis 5,
**dadurch gekennzeichnet, dass** das Einspritzröhrchen (19) eine Einspritzöffnung (20) aufweist, die sich in den Einlasskanal (7) öffnet, wobei das Aufsatzelement (21) zwischen dem Injektor (18) und der Einspritzöffnung (20) angeordnet ist.

7. Zylinderkopf (5) nach Anspruch 6,
**dadurch gekennzeichnet, dass** der Zylinderkopf (5) ein erstes Ventil (12) umfasst, das eine erste Brennkammeröffnung (9) des Einlasskanals (7) öffnen und verschließen kann, wobei das erste Ventil (12) einen Ventilteller (13) und einen Ventilschaft (14), der sich entlang einer ersten Ventilachse (L12) erstreckt, aufweist,
wobei die Einspritzöffnung (20) zumindest abschnittsweise innerhalb einer kleinsten, mit der ersten Ventilachse (L12) koaxialen, zylindrischen Einhüllenden des Ventiltellers (13) des ersten Ventils (12) angeordnet ist.

8. Zylinderkopf (5) nach Anspruch 6,
**dadurch gekennzeichnet, dass** der Zylinderkopf (5) ein erstes Ventil (12) umfasst, das eine erste Brennkammeröffnung (9) des Einlasskanals (7) öffnen und verschließen kann, wobei das erste Ventil (12) einen Ventilteller (13) und einen Ventilschaft (14), der sich entlang einer ersten Ventilachse (L12) erstreckt, aufweist, und
dass der Zylinderkopf (5) ein zweites Ventil (12') umfasst, das eine zweite Brennkammeröffnung (9') des Einlasskanals (7) reversibel öffnen und verschließen kann, wobei das zweite Ventil (12') einen Ventilteller (13') und einen Ventilschaft (14'), der sich entlang einer zweiten Ventilachse (L12') erstreckt, aufweist,
wobei die Einspritzöffnung (20) zwischen einer ersten gedachten Ebenen, die durch die erste Ventilachse (L12) und eine Senkrechte zur Röhrenseele (L19) beschrieben ist, und einer zweiten gedachten Ebenen angeordnet ist, in der die zweite Ventilachse (L12') liegt und die sich parallel zu der ersten gedachten Ebene erstreckt.

9. Zylinderkopf (5) nach einem der Ansprüche 1 bis 8,
**dadurch gekennzeichnet, dass** der Luftleitabschnitt (25, 26, 27) als Luftleitblech ausgeführt ist, dessen Erstreckung entlang eines Umfangs um die Röhrenseele (L19) kleiner ist als die radiale Erstreckung bezüglich der Röhrenseele (L19).

10. Brennkraftmaschine (1)
umfassend: einen Zylinderkopf (5) gemäß Anspruch 1 bis 9.

## Claims

1. Cylinder head (5) for an internal combustion engine (1), comprising:
a cylinder head arrangement which has an inlet duct (7) with a combustion chamber inlet opening (9),
an injector (18) which is connected to the cylinder head arrangement, and
a small tubular injection tube (19) which extends along a tube core (L19) into the inlet duct (7) and is fluidically connected to the injector (18),
**characterized**
**in that** an attachment element (21) is arranged on the small injection tube (19), and
**in that** the attachment element (21) has an air-guiding portion (25, 26, 27) which extends radially outwards with regard to the tube core (L19) in such a way that a flow in the inlet duct (7) is influenced by the air-guiding portion (25, 26, 27).

2. Cylinder head (5) according to Claim 1,
**characterized in that** a radial extent of the air-guiding portion (25, 26, 27) with regard to the tube core (L19) is greater than an axial extent.

3. Cylinder head (5) according to either of Claims 1 or 2,
**characterized**
**in that** the attachment element (21) has a first connecting portion (22), by way of which the attachment element (21) is arranged on the small injection tube (19), wherein the air-guiding portion (25, 26, 27) extends radially outwards from the first connecting portion (22) with regard to the tube core (L19).

4. Cylinder head (5) according to Claim 3,
**characterized in that** the smallest cylindrical envelope of the first connecting portion (22), the cylinder axis of which is arranged coaxially with respect to the tube core (L19), has a smaller radius than the greatest radial spacing of the air-guiding portion (25, 26, 27) from the tube core (L19).

5. Cylinder head (5) according to either of Claims 3 or 4,
**characterized in that** the attachment element (21) has a second connecting portion (23) which bears against a wall (8) of the inlet duct (7), wherein the first connecting portion (22) and the second connecting portion (23) are connected to one another via the air-guiding portion (25, 26, 27) .

6. Cylinder head (5) according to one of Claims 1 to 5,
**characterized in that** the small injection tube (19) has an injection opening (20) which opens into the inlet duct (7), wherein the attachment element (21) is arranged between the injector (18) and the injection opening (20).

7. Cylinder head (5) according to Claim 6,
**characterized in that** the cylinder head (5) comprises a first valve (12) which can open and close a first combustion chamber opening (9) of the inlet duct (7), wherein the first valve (12) has a valve disc (13) and a valve stem (14) which extends along a first valve axis (L12),
wherein the injection opening (20) is arranged at least in sections within a smallest cylindrical envelope, coaxial with the first valve axis (L12), of the valve disc (13) of the first valve (12).

8. Cylinder head (5) according to Claim 6,
**characterized in that** the cylinder head (5) comprises a first valve (12) which can open and close a first combustion chamber opening (9) of the inlet duct (7), wherein the first valve (12) has a valve disc (13) and a valve stem (14) which extends along a first valve axis (L12), and
**in that** the cylinder head (5) comprises a second valve (12') which can reversibly open and close a second combustion chamber opening (9') of the inlet duct (7), wherein the second valve (12') has a valve disc (13') and a valve stem (14') which extends along a second valve axis (L12'),
wherein the injection opening (20) is arranged between a first imaginary plane, which is described by the first valve axis (L12) and a perpendicular with respect to the tube core (L19), and a second imaginary plane, in which the second valve axis (L12') lies and which extends parallel to the first imaginary plane.

9. Cylinder head (5) according to one of Claims 1 to 8,
**characterized in that** the air-guiding portion (25, 26, 27) is configured as an air-guiding plate, the extent of which along a circumference around the tube core (L19) is smaller than the radial extent with respect to the tube core (L19).

10. Internal combustion engine (1)
comprising: a cylinder head (5) according to Claims 1 to 9.

## Revendications

1. Culasse (5) pour un moteur à combustion interne (1), comprenant :
un agencement de culasse présentant un canal d'admission (7) avec une ouverture d'admission de chambre de combustion (9)
un injecteur (18) relié à l'agencement de culasse, et
un petit tube d'injection de forme tubulaire (19) qui s'étend le long d'une âme de tube (L19) dans le canal d'admission (7) et qui est relié fluidiquement à l'injecteur (18),
**caractérisée**
**en ce qu'**un élément rapporté (21) est agencé sur le petit tube d'injection (19), et
**en ce que** l'élément rapporté (21) présente une section de guidage d'air (25, 26, 27) qui s'étend radialement vers l'extérieur par rapport à l'âme de tube (L19) de telle sorte qu'un écoulement dans le canal d'admission (7) est influencé par la section de guidage d'air (25, 26, 27).

2. Culasse (5) selon la revendication 1,
**caractérisée en ce qu'**une extension radiale de la section de guidage d'air (25, 26, 27) par rapport à l'âme de tube (L19) est supérieure à une extension axiale.

3. Culasse (5) selon l'une quelconque des revendications 1 ou 2,
**caractérisée**
**en ce que** l'élément rapporté (21) présente une première section de liaison (22) avec laquelle l'élément rapporté (21) est agencé sur le petit tube d'injection (19), la section de guidage d'air (25, 26, 27) s'étendant radialement vers l'extérieur à partir de la première section de liaison (22) par rapport à l'âme de tube (L19).

4. Culasse (5) selon la revendication 3,
**caractérisée en ce que** la plus petite enveloppe cylindrique de la première section de liaison (22), dont l'axe de cylindre est agencé coaxialement à l'âme de tube (L19), présente un rayon inférieur à la plus grande distance radiale de la section de guidage d'air (25, 26, 27) par rapport à l'âme de tube (L19).

5. Culasse (5) selon l'une quelconque des revendications 3 ou 4,
**caractérisée en ce que** l'élément rapporté (21) présente une deuxième section de liaison (23) qui est en appui avec une paroi (8) du canal d'admission (7), la première section de liaison (22) et la deuxième section de liaison (23) étant reliées entre elles par la section de guidage d'air (25, 26, 27).

6. Culasse (5) selon l'une quelconque des revendications 1 à 5,
**caractérisée en ce que** le petit tube d'injection (19) présente une ouverture d'injection (20) qui débouche dans le canal d'admission (7), l'élément rapporté (21) étant agencé entre l'injecteur (18) et l'ouverture d'injection (20).

7. Culasse (5) selon la revendication 6,
**caractérisée en ce que** la culasse (5) comprend une première soupape (12) qui peut ouvrir et fermer une première ouverture de chambre de combustion (9) du canal d'admission (7), la première soupape (12) présentant un disque de soupape (13) et une tige de soupape (14) s'étendant le long d'un premier axe de soupape (L12),
l'ouverture d'injection (20) étant agencée au moins par sections à l'intérieur d'une enveloppe cylindrique minimale coaxiale au premier axe de soupape (L12) du disque de soupape (13) de la première soupape (12).

8. Culasse (5) selon la revendication 6,
**caractérisée en ce que** la culasse (5) comprend une première soupape (12) qui peut ouvrir et fermer une première ouverture de chambre de combustion (9) du canal d'admission (7), la première soupape (12) présentant un disque de soupape (13) et une tige de soupape (14) s'étendant le long d'un premier axe de soupape (L12), et **en ce que** la culasse (5) comprend une deuxième soupape (12) qui peut ouvrir et fermer de manière réversible une deuxième ouverture de chambre de combustion (9) du canal d'admission (7), la deuxième soupape (12) présentant un disque de soupape (13) et une tige de soupape (14) s'étendant le long d'un deuxième axe de soupape (L12),
l'ouverture d'injection (20) étant agencée entre un premier plan imaginaire décrit par le premier axe de soupape (L12) et une perpendiculaire à l'âme de tube (L19), et un deuxième plan imaginaire dans lequel se situe le deuxième axe de soupape (L12') et qui s'étend parallèlement au premier plan imaginaire.

9. Culasse (5) selon l'une quelconque des revendications 1 à 8,
**caractérisée en ce que** la section de guidage d'air (25, 26, 27) est conçue sous forme de tôle de guidage d'air dont l'extension le long d'une circonférence autour de l'âme de tube (L19) est inférieure à l'extension radiale par rapport à l'âme de tube (L19).

10. Moteur à combustion interne (1)
comprenant : une culasse (5) selon les revendications 1 à 9.
